Europäisches Patentamt

European Patent Office

Office européen des brevets

(11) Veröffentlichungsnummer : **0 373 115 B1**

(12) **EUROPÄISCHE PATENTSCHRIFT**

(45) Veröffentlichungstag der Patentschrift :
**11.03.92 Patentblatt 92/11**

(21) Anmeldenummer : **89810907.9**

(22) Anmeldetag : **28.11.89**

(51) Int. Cl.$^5$ : **B29C 47/20, B29C 47/22, B29C 47/26, B29C 47/70**

(54) **Extrusionskopf.**

(30) Priorität : **09.12.88 CH 4562/88**

(43) Veröffentlichungstag der Anmeldung :
**13.06.90 Patentblatt 90/24**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI LU NL SE**

(56) Entgegenhaltungen :
**EP-A- 0 298 908**
**WO-A-89/04247**
**DE-A- 1 629 511**
**DE-A- 1 806 007**
**DE-B- 1 142 057**
**FR-A- 1 330 757**
**FR-A- 1 385 115**
**FR-A- 2 180 737**
**US-A- 3 724 986**

(56) Entgegenhaltungen :
**US-A- 3 801 254**
**PATENT ABSTRACTS OF JAPAN, Band 8, Nr.
258 (M-340)[1695], 27. November 1984; & JP-
A-59 131 433 (TAKIRON K.K.) 28-07-1984**
**PATENT ABSTRACTS OF JAPAN, Band 7, Nr.
47 (M-196)[1192], 24. Februar 1983; & JP-A-57
197 129 (SEKISUI KAGAKU KOGYO K.K.) 03-
12-1982**

(73) Patentinhaber : **SOPLAR SA**
**Transportstrasse 3**
**CH-9450 Altstätten (CH)**

(72) Erfinder : **Lehner, Alwin**
**Allmendstrasse 81**
**A-6971 Hard (AT)**
Erfinder : **Karg, Peter**
**Fähnernstrasse 1**
**CH-9434 Au (CH)**

(74) Vertreter : **Riederer, Conrad A., Dr.**
**Bahnhofstrasse 10**
**CH-7310 Bad Ragaz (CH)**

## Beschreibung

Die Erfindung betrifft einen Extrusionskopf, insbesondere zur Herstellung von Vorformlingen für geblasene Behälter, z.B. Flaschen, aus Kunststoff, mit einem Kopfkörper, der mindestens einen Durchlass aufweist, einem im Durchlass angeordneten Dorn, welcher an seinem distalen Ende einen Kern aufweist, einer durch den Dorn führenden Regelstange zur axialen Verstellung des Kerns, einem Dornhalter mit Stegen, welche den Dorn so haltern, dass zwischen der Wandung des Durchlasses und dem Dorn Durchflusskanäle für die Schmelze gebildet werden, einem im Oberteil angeordneten Schmelzezufuhrkanal zur Beschickung des Durchlasses, einen im Schmelzezufuhrkanal über dem Durchlass vorgesehenen Stromteiler, welcher die Bildung von Teilströmen veranlasst, die die Regelstange in seitlichen Ausweichkanälen umfliessen können.

Bei der Herstellung von geblasenen Kunststoffbehältern, z.B. Flaschen, werden in der Regel mittels Extrusionsköpfen schlauchförmige Vorformlinge hergestellt, welche dann durch Blasformen weiterverarbeitet werden. Zum Extrudieren der Vorformlinge stehen zwei grundsätzlich verschiedene Arten von Extrusionsköpfen zur Wahl, nämlich Köpfe mit seitlicher Anströmung der Schmelze, z.B. Pinolenköpfe, und Köpfe mit zentraler Anströmung, die sogenannten Dornhalterköpfe. Beim Pinolenkopf ist zur Einstellung der Wandstärke der Kern verstellbar, beim Dornhalterkopf hingegen das Mundstück. Um die Produktionskapazität moderner Blasmaschinen auszunützen, müssen gleichzeitig soviele Vorformlinge zur Verfügung stehen wie zur Beschickung einer Mehrfachform notwendig sind. Die Extrusionsvorrichtung sollte also eine Vielzahl von Vorformlingen gleichzeitig herstellen können. Der Extrusionskopf wird dabei vorteilhaft von einem einzigen Extruder mit Kunststoffschmelze von bestimmter Temperatur beschickt.

Bei der Wahl der Art der Extrusionsköpfe mussten in der Regel die Vorteile und Nachteile der Pinolenköpfe und der Dornhalterköpfe gegeneinander abgewogen werden.

Der Pinolenkopf ist relativ einfach im Aufbau und daher auch relativ billig. Die sogenannte Pinole dient der radialen Verteilung der Schmelze und der Führung der Regelstange zur axialen Verstellung des Kerns, welcher der Formung des Hohlraums im extrudierten Schlauchstück dient. Durch die axiale Verstellung der Regelstange kann der Kern in bezug auf das Mundstück verstellt werden, um die Wandstärke des Schlauchstücks einzustellen. Beim Pinolenkopf wirkt es sich nachteilig aus, dass der seitliche zufliessende Schmelzestrom durch die Pinole in zwei Teilströme aufgeteilt wird, welche dann hinter der Pinole wieder zusammenfliessen. Durch die Aufteilung des Schmelzestroms durch den kreisrunden querschnitt der Pinole entstehen in der Schmelze ungünstige Flussverhältnisse, wobei sich dann an der Stelle des Zusammenfliessens der Teilströme Dünnstellen im Schlauchstück bilden können. Dieses Problem tritt vor allem bei schwerflüssigen Kunststoffschmelzen auf. Für den Erfolg des nachfolgenden Blasverfahrens sind jedoch Vorformlinge notwendig, die über den ganzen Umfang die gleiche Wandstärke aufweisen. Ist dies nicht der Fall, so ist die Gefahr sehr gross, dass beim Blasen Ausschuss entsteht.

Der Dornhalterkopf (DE-A-1 629 511) ist komplizierter im Aufbau und daher in der Regel etwas teurer als der Pinolenkopf. Beim Dornhalterkopf wird der Dorn, d.h. der Kern, der den Hohlraum des Vorformlings bildet, mit dünnen radialen Stegen mit dem Körper des Kopfs verbunden. Diese Stege können strömungstechnisch günstig ausgebildet werden, so dass die Schmelze nach dem Passieren der Stege sauber zusammenfliesst und praktisch keine Gefahr der Bildung von Dünnstellen im Vorformling besteht. Beim sogenannten Versetztsteg-Dornhalterkopf sind zudem die Stege so ausgebildet, dass das Schlauchstück z.B. durch zwei koaxial angeordnete Gruppen von einander überlappenden Teilströmen gebildet wird. Dabei wird immer eine mögliche Schwachstelle durch eine homogene Schicht überlappt. Den Vorteilen der Dornhalterköpfe steht jedoch der Nachteil gegenüber, dass sie zur Einstellung der Wandstärke des Vorformlings einen komplizierten Mechanismus benötigen. Dieser Verstellmechanismus, mit dem eine axiale Verstellung des Mundstücks bewerkstelligt werden kann, bietet auch erhebliche Dichtungs- und Stabilitätsprobleme. Ausserdem sind die Verstellkräfte grösser als beim Pinolenkopf. Dadurch werden dem Konstrukteur enge Grenzen gesetzt. Ein weiterer Nachteil besteht darin, dass es schwierig ist, Mehrfachköpfe mit dieser Kontruktionsart zu bauen.

Die FR-A-1 330 757 zeigt einen Extrusionskopf mit einem in einem Durchlass angeordneten Dorn. Dieser Dorn weist an seinem distalen Ende einen Kern auf, welcher mit einer durch den Dorn führenden Regelstange verstellbar ist. Weiter ist ein Dornhalter mit Stegen vorgesehen, welche den Dorn so haltern, dass zwischen der Wandung des Durchlasses und dem Dorn Durchflusskanäle für die Schmelze gebildet werden. Wie bei einem gewöhnlichen Pinolenkopf wirkt sich hier nachteilig aus, dass der seitlich zufliessende Schmelzestrom durch den kreisrunden querschnitt der im Schmelzestrom ragenden Teile der Schmelzestrom unregelmässig in Teilströme aufgeteilt wird. Es entstehen dabei ungünstige Flussverhältnisse, welche Dünnstellen im extrudierten schlauchförmigen Vorformling zur Folge haben können. Der gezeigte Extrusionskopf ist ein Einfachkopf. Wegen der ungünstigen Flussverhältnisse im Schmelzkanal eignet sich diese Bauart auch nicht zur Konstruktion von Mehrfachköpfen, wie sie zur rationellen Ausnützung moderner Blasmaschinen erwünscht sind.

2

Es ist Aufgabe der vorliegenden Erfindung, einen Extrusionskopf der eingangs erwähnten Art so zu verbessern, dass extrudierte Vorformlinge von hoher qualität hergestellt werden können. Trotzdem sollte es auch möglich sein, die Extrusionsvorrichtung als Mehrfachkopf auszugestalten.

Gemäss der Erfindung wird dies dadurch erreicht, dass der Stromteiler vorn eine bugförmige Spitze aufweist. Bei dieser Ausbildung des Extrusionskopfs kann die Schmelze seitlich zugeführt werden, wobei dann eine Umlenkung in den Schmelzezufuhrkanal unter günstigen Strömungsbedingungen erfolgt. Durch die bugförmige Spitze wird die Schmelze in zwei praktisch laminare Ströme aufgeteilt. Ausser beim letzten mit Schmelze zu beschickenden Durchlass, läuft der Stromteiler vorteilhaft hinten spitz aus. Die verhindert die Entstehung von Turbulenzen.

Vorteilhaft verjüngt sich der Stromteiler konisch vom Grund des Kanals in Richtung auf den Durchlass hin. Dadurch wird die Schmelze in axialer Richtung in den Durchlass gelenkt, wobei praktisch keine Turbulenzen entstehen. Aus den gleichen Gründen verlaufen beim letzten mit Schmelze zu beschikkenden Durchlass die Seitenwände vom Kanalgrund her vorteilhaft ansteigend. Vorteilhaft weist der jeweilige Durchlass eingangsseitig eine trompetenförmige Ausweitung auf. Dadurch wird sichergestellt, dass die Schmelze optimal in den Durchlass hineinfliesst. Es ist möglich, beim Extrusionskopf eine Vielzahl von Durchlässen vorzusehen, wobei dann der als Platte ausgebildete Oberteil einen gemeinsamen Schmelzezufuhrkanal zur Beschickung der Durchlässe aufweist. Dies hat den Vorteil, dass grundsätzlich ein einziger Extruder zur gleichzeitigen Herstellung einer Vielzahl von Vorformlingen genügt. Es ist aber auch möglich, den Schmelzezufuhrkanal mit zwei Extrudern zu beschicken, wobei dem Schmelzezufuhrkanal auch zwei verschiedenartige, z.B. verschiedenfarbige Schmelzen zugeführt werden können. Auf solche Weise ist es auch möglich, Flaschen herzustellen, die zwei verschiedene Farben aufweisen, z.B. auf der Vorderseite farbig und auf der Hinterseite durchsichtig sind. Weil über dem Durchlass ein Stromteiler vorgesehen ist, wird die Bildung von klar definierten Teilströmen veranlasst, welche die Regelstange und/oder Drosselschraube in seitlichen Ausweichkanälen umfliessen können. Der Stromteiler gewährleistet einen praktisch optimalen Fluss der Schmelze; dies zum Gegensatz zu den bekannten Pinolenköpfen, wo der runde querschnitt der Pinole den Fluss der Schmelze erheblich stört.

Es ist möglich, in der Regelstange einen Kanal zur Zufuhr von Gas, z.B. Luft oder Flüssigkeit, zum Vorformling vorzusehen. Zur Regelung der Schmelzezufuhr kann beim Eingang des Durchlasses eine Drosselschraube vorgesehen sein. Dies ermöglicht es, bei Mehrfachköpfen die Extrusionsgeschwindigkeit bei den einzelnen Extrusionsdüsen aufeinander abzustimmen, so dass Vorformlinge gleicher Länge erzeugt werden. Die Drosselschraube ist zweckmässigerweise als Hohlschraube ausgebildet, durch welche die Regelstange hindurchführt. Es stellt dies eine besonders einfache und zweckmässige Konstruktion dar, bei welcher sowohl Regelstange als auch Drosselschraube leicht verstellbar sind. Die Drosselschraube kann vorn einen praktisch konusförmigen Abschnitt aufweisen, welcher in eine praktisch konusförmige Ausweitung am Eingang des Durchflusskanals passt. Eine solche Ausbildung ergibt günstige Durchflussbedingungen für die Schmelze, wobei durch die Drosselschraube eine feine Regulierung möglich ist.

Der Stromteiler ist vorteilhaft so ausgebildet, dass er die Regelstange und die Drosselschraube mindestens teilweise umgibt. Regelstange und Drosselschraube wirken sich daher nicht nachteilig auf das Fliessverhalten der Schmelze aus.

Die Erfindung wird nun unter Bezugnahme auf die Zeichnung beschrieben. Es zeigt:

Fig. 1 eine schematische Darstellung eines Ausführungsbeispiels des erfindungsgemässen Extrusionskopfes,

Fig. 2 eine Ansicht von unten auf die Platte mit dem Schmelzezufuhrkanal,

Fig. 3 einen Schnitt entlang der Linie III - III von Fig. 1 durch den Extrusionskopf im Bereich des Schmelzezufuhrkanals,

Fig. 4 einen Schnitt entlang der Linie IV - IV von Fig. 3,

Fig. 5 eine Ansicht von unten auf die Platte mit dem Schmelzezufuhrkanal im Bereich des letzten Durchlasses, und

Fig. 6 einen Schnitt entlang der Linie VI - VI von Fig. 1.

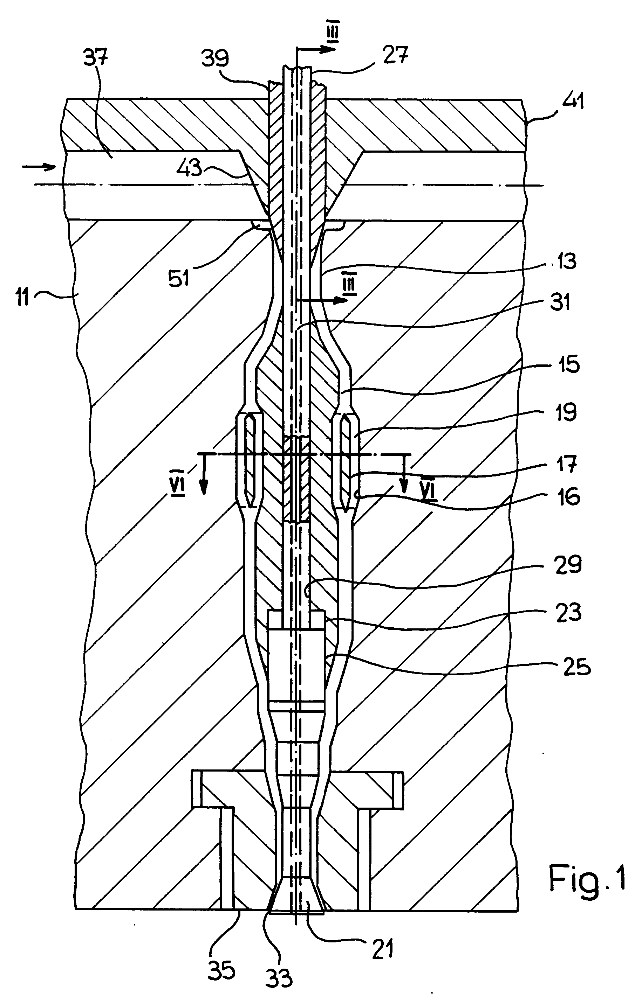

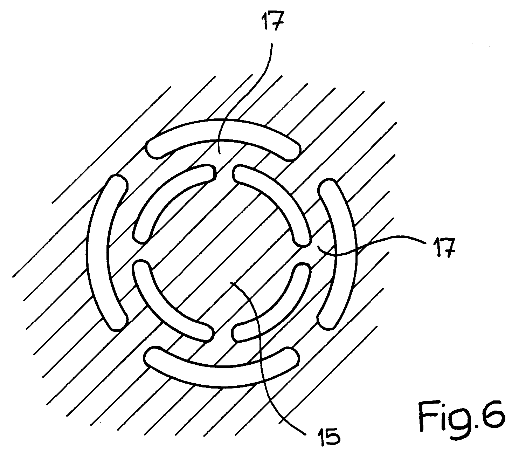

Fig. 1 zeigt schematisch Teil eines Mehrfachkopfes zur Herstellung von Vorformlingen für geblasene Behalter. Die gleiche Konstruktion könnte aber auch für einen Einfachkopf verwendet werden. Im Kopfkörper 11 ist ein Durchlass 13 ausgeformt. In diesem Durchlass 13 ist ein Dorn 15 mit Stegen 17 so gehalten, dass zwischen der Wandung 16 des Durchlasses 13 und dem Dorn 15 Durchflusskanäle 19 für die Schmelze gebildet werden. Die Ausbildung der Stege 17 kann so sein, wie dies beispielsweise bei einem handelsüblichen Versetztstegdorn-Extrusionskopf der Fall ist. Eine solche Anordnung wird in Figur 6 im Schnitt dargestellt.

Der Dorn 15 besitzt flussabwärts, d.h. am distalen Ende einen verstellbaren Kern 21. Zu diesem Zweck weist der Dorn eine zylindrische Bohrung 23 auf, in welcher ein kolbenförmiger Teil 25 des Kerns 21 verschiebbar gelagert ist. Zur Verschiebung des Kerns 21 dient eine axial verstellbare Regelstange 27. Der Verstellmechanismus für die Regelstange ist nicht eingezeichnet. Er kann auf übliche Weise durch eine Schraubvorrichtung gebildet werden. Es ist zu beachten, dass die Regelstange 27 durch eine koaxiale Bohrung 29 des Dorns 15 führt. Die Regelstange 27 weist einen Kanal 31 zur Zufuhr von Luft zum Vorformling auf. Die Düse 33 zur Herstellung des schlauchförmigen Vorformlings wird durch den Spalt zwischen dem Kern 21 und dem Mundstück 35 gebildet. Die Zufuhr der Schmelze erfolgt über den Schmelzezufuhrkanal 37. Zu diesem Zweck wird ein nicht dargestellter Extruder an den Schmelzezufuhrkanal 37 angeschlossen. Zur Regelung der Schmelzezufuhr in den Durchlass 13 dient eine Drosselschraube 39. Diese Drosselschraube 39 ist als Hohlschraube ausgebildet, durch welche die Regelstange 27 führt.

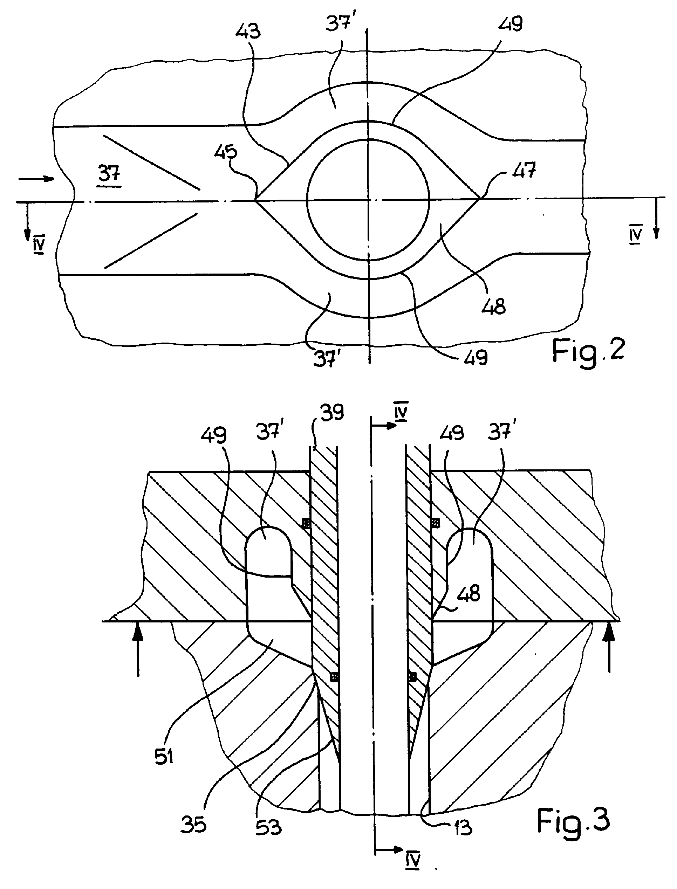

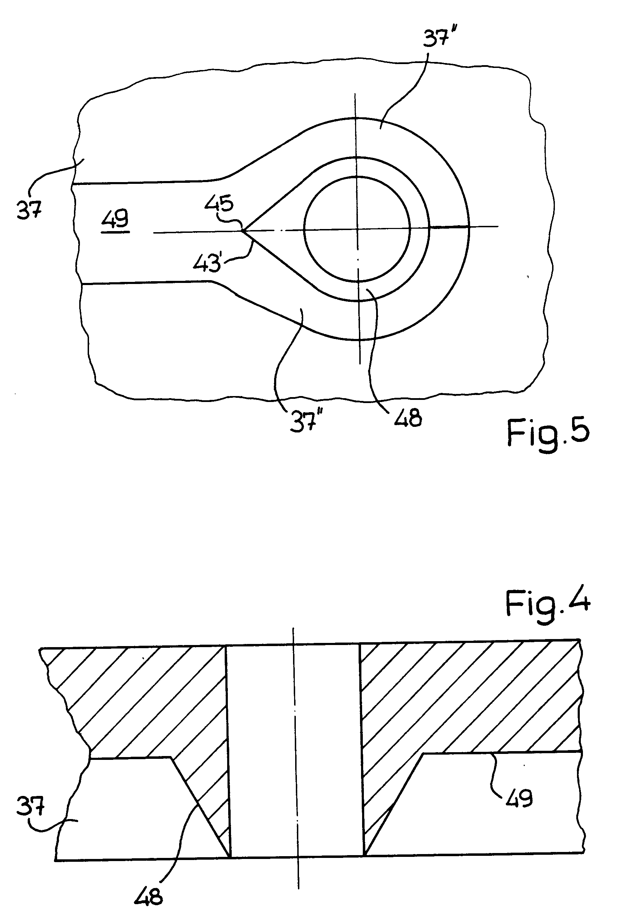

Wie Fig. 1 zeigt, ist der Schmelzezufuhrkanal 37 im Oberteil 41 ausgebildet, welcher z.B. mit Schrauben (nicht eingezeichnet) mit dem Kopfkörper 11 verbunden ist. Die Ausgestaltung des Schmelzezufuhrkanals 37 ist insbesondere aus den Fig. 2 bis 5 ersichtlich. Wenn der Extrusionskopf eine Vielzahl von Durchlässen 13 aufweist, kann der Oberteil 41 einen für alle Durchlässe gemeinsamen Schmelzezufuhrkanal aufweisen. Ueber dem Durchlass 13 ist jeweils ein Stromteiler 43 vorgesehen. Alle Stromteiler, ausser dem letzten 43′ (Fig. 5), sind gleich ausgebildet.

Wie Fig. 3 zeigt, weist der Stromteiler 43 vorn eine bugförmige Spitze 45 auf. Auch hinten besitzt der Stromteiler 43 eine Spitze 47. Aus den Fig. 1 und 4 ist ersichtlich, dass der Stromteiler vom Grund 49 des Schmelzezufuhrkanals 37 in Richtung auf den Durchlass 13 hin sich konisch verjüngt. Die Fläche 48 stellt also eine Konusfläche dar. Wie die Fig. 2 und 3 zeigen, wird durch den Stromteiler 43 der Schmelzezufuhrkanal 37 in zwei Seitenkanäle 37′ aufgeteilt. Die Wandungen 49 der Seitenkanale 37′ sind relativ dünn, damit die Ablenkung der Schmelzeteilströme relativ gering bleibt.

Beim gezeigten Ausführungsbeispiel ist der Schmelzezufuhrkanal 37 vollständig im Oberteil 41 ausgebildet. Es wäre aber auch möglich, den Schmelzezufuhrkanal 37 ganz oder teilweise im Kopfkörper selbst auszubilden. Die beschriebene Ausbildung hat jedoch in fabrikatorischer Hinsicht Vorteile.

Wie bereits vorher erwähnt wurde, hat der letzte Stromteiler 43′ (Fig. 5) eine etwas andere Ausbildung als die vorangehenden Stromteiler 43. Der Vorderteil mit der Spitze 45 ist gleich ausgebildet wie bereits vorher beschrieben. Wiederum ist auch eine Konusfläche 48 vorhanden. Die Seitenkanale 37″ verlaufen jedoch vom Grund 49 des Schmelzezufuhrkanals 37 ansteigend.

Nach der Beschreibung des Schmelzezufuhrkanals 37 bleibt noch darauf hinzuweisen, dass der Durchlass 13 eingangsseitig eine trompetenförmige Ausweitung 51 besitzt. Die in diese Ausweitung 51 einfliessende Schmelze kann daher nach unten in den Durchlass 13 fliessen, sofern der Durchlass 13 nicht wie in Fig. 3 gezeigt mit der Drosselschraube 39 ganz verschlossen ist.

Die Drosselschraube 39 weist vorn einen konusförmigen Abschnitt 53 auf, der in eine konusförmige Ausweitung 35 am Eingang des Durchlasses 13 passt.

Im Betrieb des Extrusionskopfes fördert der Extruder die Kunstharzschmelze in den Schmelzezufuhrkanal 37. Der Schmelzestrom wird jeweils durch die Stromteiler 43 sauber geteilt. Die beiden Teilströme vereinigen sich wieder an der hinteren Spitze 47 des Stromteilers 43. Der so gebildete Schmelzestrom fliesst dann weiter, wobei gegebenenfalls weitere Stromteiler die gleiche Operation wiederholen. Bei jedem Stromteiler 43 dringt aber auch ein Teil der Schmelze in die Ausweitung 51 und von dort weiter in den Durchlass 13. Beim letzten Stromteiler 43′ fliesst der ganze dort noch eintreffende Strom in die Ausweitung 51 des Durchlasses 13.

Der in den jeweiligen Durchlass 13 strömende Schmelzestrom umfliesst dann den Dorn 15. Da die Stege 17 dünn ausgebildet sind, stören sie den Fluss des Schmelzestroms nach unten praktisch nicht. Schliesslich tritt die Schmelze aus der Düse 33 in Form eines Schlauches aus. Die Wandstärke des Schlauches kann durch eine axiale Bewegung der Regelstange 27 reguliert werden. Die Regulierung der Austrittsgeschwindigkeit erfolgt durch die Drosselschraube 39.

## Patentansprüche

1. Extrusionskopf, insbesondere zur Herstellung von Vorformlingen für geblasene Behälter, z.B. Flaschen, aus Kunststoff, mit einem Kopfkörper (11), der mindestens einen Durchlass (13) aufweist, einem im Durchlass (13) angeordneten Dorn (15), welcher an seinem distalen Ende einen Kern (21) aufweist, einer durch den Dorn (15) führenden Regelstange (27) zur axialen Verstellung des Kerns (21), einem Dornhalter mit Stegen (17), welche den Dorn so haltern, dass zwischen der Wandung des Durchlasses (13) und dem Dorn (15) Durchflusskanäle für die Schmelze gebildet werden, einem im Oberteil (41) angeordneten Schmelzezufuhrkanal (37) zur Beschickung des Durchlasses (13), einem im Schmelzezufuhrkanal (37) über dem Durchlass (13) vorgesehenen Stromteiler (43), welcher die Bildung von Teilströmen veranlasst, die die Regelstange (27) in seitlichen Ausweichkanälen (37′) umfliessen können, dadurch gekennzeichnet, dass der Stromteiler (43) vorn eine bugförmige Spitze (45) aufweist.

2. Extrusionskopf nach Anspruch 1, mit mehreren Durchlässen (13), dadurch gekennzeichnet, dass ausser

EP 0 373 115 B1

beim letzten mit Schmelze zu beschickenden Durchlass (13) der Stromteiler (43) hinten spitz ausläuft.

3. Extrusionskopf nach Anspruch 1 oder 2, dadurch gekennzeichnet, dass der Stromteiler (43) vom Grund (49) des Schmelzezufuhrkanals (37) in Richtung auf den Durchlass (13) hin sich konisch verjüngt.

4. Extrusionskopf nach Anspruch 2 oder 3, dadurch gekennzeichnet, dass beim letzten mit Schmelze zu beschickenden Durchlass (13) die seitlichen Ausweichkanäle (37″) vom Grund (49) des Schmelzezufuhrkanals (37) her ansteigend verlaufen.

5. Extrusionskopf nach einem der Ansprüche 1 bis 5, dadurch gekennzeichnet, dass eingangsseitig der Durchlass (13) eine trompetenförmige Ausweitung (51) aufweist.

6. Extrusionskopf nach einem der Ansprüche 1 bis 5, dadurch gekennzeichnet, dass die Regelstange (27) einen Kanal (31) zur Zufuhr von Gas, z.B. Luft oder Flüssigkeit, zum Vorformling aufweist.

7. Extrusionskopf nach einem der Ansprüche 1 bis 6, dadurch gekennzeichnet, dass beim Eingang des Durchlasses (13) eine Drosselschraube (39) vorgesehen ist.

8. Extrusionskopf nach Anspruch 7, dadurch gekennzeichnet, dass die Drosselschraube (39) als Hohlschraube ausgebildet ist, durch welche die Regelstange (27) hindurchführt.

9. Extrusionskopf nach Anspruch 7 oder 8, dadurch gekennzeichnet, dass die Drosselschraube (39) vorn einen konusförmigen Abschnitt (53) aufweist, welcher in die Ausweitung (51) des Durchlasses (13) passt.

10. Extrusionskopf nach einem der Ansprüche 1 bis 9, dadurch gekennzeichnet, dass eine Vielzahl von Durchlässen (13) vorgesehen ist, und dass der Oberteil (41) eine Platte mit einem gemeinsamen Schmelzezufuhrkanal (37) zur Beschickung der Durchlässe (13) ist.

11. Extrusionskopf nach einem der Ansprüche 1 bis 10, dadurch gekennzeichnet, dass der Stromteiler (43) die Regelstange (27) und gegebenenfalls die Drosselschraube (39) mindestens teilweise umgibt.

12. Verwendung des Extrusionskopfes nach einem der Ansprüche 1 bis 11 mit zwei Extrudern, welche den Schmelzezufuhrkanal mit zwei verschiedenartigen Schmelzen beschicken.

## Claims

1. An extrusion head, more particularly for the production of pre-forms for blown containers, e.g. bottles, from plastics, comprising a head member (11) having at least one passage (13), a mandrel (15) which is disposed in the passage (13) and the distal end of which has a core (21), a control rod (27) extending through the mandrel (15) for axial adjustment of the core (21), a mandrel holder with webs (17) which so hold the mandrel as to form flow ducts for the melt between the wall of the passage (13) and the mandrel (15), a melt feed duct (37) disposed in the top part (41) to feed melt to the passage (13), a flow divider (43) provided in the melt feed duct (37) above the passage (13) to form sub-flows which can flow around the control rod (27) in lateral escape ducts (37′), characterised in that the flow divider (43) has a point (45) after the style of a ship's bow at the front.

2. An extrusion head according to claim 1, comprising a plurality of passages (13), characterised in that the flow divider (43) terminates at a point at the rear except at the last passage (13) to be fed with melt.

3. An extrusion head according to claim 1 or 2, characterised in that the flow divider (43) tapers conically from the base (49) of the melt feed duct (37) towards the passage (13).

4. An extrusion head according to claim 2 or 3, characterised in that the lateral escape ducts (37″) extend slopingly from the base (49) of the melt feed duct (37) at the last passage (13) to be fed with melt.

5. An extrusion head according to any one of claims 1 to 5, characterised in that the passage (13) has a trumpet-shaped widening (51) on the entry side.

6. An extrusion head according to any one of claims 1 to 5, characterised in that the control rod (27) has a duct (31) for the supply of gas, e.g. air or fluid, to the pre-form.

7. An extrusion head according to any one of claims 1 to 6, characterised in that a throttling screw (39) is provided at the entry to the passage (13).

8. An extrusion head according to claim 7, characterised in that the throttling screw (39) is formed as a hollow screw through which the control rod (27) extends.

9. An extrusion head according to claim 7 or 8, characterised in that the throttling screw (39) has a conical portion (53) at the front, which fits into the widened portion (51) of the passage (13).

10. An extrusion head according to any one of claims 1 to 9, characterised in that a plurality of passages (13) is provided and in that the top part (41) is a plate with a common melt feed duct (37) to feed melt to the passages (13).

11. An extrusion head according to any one of claims 1 to 10, characterised in that the flow divider (43) surrounds the control rod (27) and, if required, the throttling screw (39) at least partially.

12. Use of the extrusion head according to any one of claims 1 to 11 with two extruderes which feed the melt feed duct with two different types of melt.

## Revendications

1. Tête d'extrusion, en particulier pour la fabrication d'ébauches pour des récipients en matière plastique produits par soufflage, par exemple des bouteilles, comportant un corps de tête (11) qui présente au moins un passage (13), un poinçon (15) qui est disposé dans le passage (13) et qui présente un noyau (21) à son extrémité éloignée, une tige de réglage (27) passant à travers le poinçon pour le déplacement axial du noyau (21), un porte-poinçon avec des nervures (17) qui maintiennent le poinçon de telle sorte que des conduits d'écoulement pour la masse fondue soient formés entre la paroi du passage (13) et le poinçon (15), un conduit d'admission de masse fondue (37) disposé dans la partie supérieure (41) pour l'alimentation du passage (13), un diviseur de courant (43), qui est prévu dans le conduit d'admission de masse fondue (37) au-dessus du passage (13) et qui donne lieu à la formation de courants partiels, qui peuvent couler autour de la tige de réglage (27) dans des conduits latéraux de déviation (37′), caractérisée en ce que le diviseur de courant (43) présente en avant une pointe en forme de proue (45).

2. Tête d'extrusion selon la revendication 1, comportant plusieurs passages (13), caractérisée en ce qu'excepté au niveau du dernier passage (13) à alimenter en masse fondue, le diviseur de courant (43) se termine en pointe à l'arrière.

3. Tête d'extrusion selon la revendication 1 ou 2, caractérisée en ce qu'à partir du fond (49) du conduit d'admission de masse fondue (37), le diviseur de courant s'amincit en cône en direction du passage (13).

4. Tête d'extrusion selon la revendication 2 ou 3, caractérisée en ce qu'au niveau du dernier passage (13) à alimenter en masse fondue, les conduits latéraux de déviation (37″) s'étendent en montant à partir du fond (49) du conduit d'admission de masse fondue (37).

5. Tête d'extrusion selon l'une quelconque des revendications 1 à 5, caractérisée en ce que du côté entrée, le passage (13) présente un élargissement (51) en forme de trompette.

6. Tête d'extrusion selon l'une quelconque des revendications 1 à 5, caractérisée en ce que la tige de réglage (27) comporte un conduit (31) pour l'admission de gaz, par exemple d'air, dans l'ébauche.

7. Tête d'extrusion selon l'une quelconque des revendications 1 à 6, caractérisée en ce qu'une vis d'étranglement (39) est prévue au niveau de l'entrée du passage (13).

8. Tête d'extrusion selon la revendication 7, caractérisée en ce que la vis d'étranglement (39) est réalisée sous forme de vis creuse, à travers laquelle passa la tige de réglage (27).

9. Tête d'extrusion selon la revendication 7 ou 8, caractériée en ce que la vis d'étranglement présente en avant un segment conique (53) qui s'adapte dans l'élargissement (51) du passage (13).

10. Tête d'extrusion selon l'une quelconque des revendications 1 à 9, caractérisée en ce qu'il est prévu une multiplicité de passages (13), et en ce que la partie supérieure (41) est une plaque comportant un conduit commun d'admission de masse fondue (37) pour l'alimentation des passages (13).

11. Tête d'extrusion selon l'une quelconque des revendications 1 à 10, caractérisée en ce que le diviseur de courant (43) entoure au moins partiellement la tige de réglage (27) et éventuellement la vis d'étranglement (39).

12. Utilisation de la tête d'extrusion selon l'une quelconque des revendications 1 à 11 avec deux extrudeuses qui approvisionnent le conduit d'admission de masse fondue avec deux masses fondues de natures différentes.

Fig.1

Fig.2

Fig.3

Fig.5

Fig.4

Fig.6